# EUROPÄISCHE PATENTSCHRIFT

(11) **EP 1 083 221 B1**
(45) Veröffentlichungstag und Bekanntmachung des Hinweises auf die Patenterteilung: **24.03.2004**
(21) Anmeldenummer: 00116838.4
(22) Anmeldetag: 04.08.2000
(51) Int. Cl.: C12H 1/22

(54) **Verfahren und Vorrichtung zur Begasung von Weinen**
Process and device for the aeration of wines
Procédé et dispositif pour l'aération de vins

(30) Priorität: 12.08.1999 DE 19938226
(43) Veröffentlichungstag der Anmeldung: 14.03.2001
(73) Patentinhaber: Forschungszentrum Jülich GmbH, 52425 Jülich (DE)
(72) Erfinder: Tesch, Martin, Dr., 55450 Langenlonsheim (DE); Takors, Ralf, Dr.-Ing., 52399 Merzenich (DE); Brandt, Hans-Jürgen, 52457 Aldenhoven (DE); Wandrey, Christian, Prof. Dr., 52428 Jülich (DE)
(74) Vertreter: Oppermann, Ewald, Dipl.-Ing.

(56) Entgegenhaltungen:
- FR-A- 2 701 485
- US-A- 4 848 749
- US-A- 5 537 913

## Beschreibung

Die Erfindung bezieht sich auf ein Verfahren zur Begasung von für den menschlichen Verzehr bestimmten Flüssigkeiten, insbesondere von Weinen, nach dem Oberbegriff des Patentanspruchs 1. Die Erfindung schließt auch eine insbesondere zur Verfahrensdurchführung geeignete Vorrichtung ein.

Bevorzugtes Anwendungsgebiet der Erfindung ist die Weinherstellung (Gär- und Ausbauphase/Weinreifung und zur Verhinderung "stockender Gärung"), insbesondere die Herstellung von Rot- und Weißweinen, aber auch von Portweinen und Sherry-Weinen. Auch ein Einsatz bei der Reifung von stark alkoholhaltigen Bränden ist möglich. Schließlich läßt sich die Erfindung auch generell bei langsam in flüssiger Phase ablaufenden oxidativen Reifeprozessen in der Lebensmittelindustrie einsetzen, z.B. bei der Essigherstellung. Die Erfindung wird nachfolgend für das bevorzugte Anwendungsgebiet der Weinherstellung beschrieben.

Die Oxidation des Weines ist ein tendenziell negativ belegter Vorgang. Nach vorherrschender Meinung im Weinbau sollte die Reifung und Alterung des Weines generell unter anaeroben Bedingungen durchgeführt werden. Ein direkter Kontakt z.B. mit Umgebungsluft gilt als unerwünscht. Viele Autoren [z.B. Tulyathan V., (1989). Oxygen Uptake by Gallic Acid as a Model for Similar Reactions in Wines. Journal of Agriculture and Food Chemistry, 37 844849-849] bezeichnen die Oxidation von weißen Tafelweinen als unerwünscht. Allerdings gibt es auch Untersuchungen zur Begasung von Weißweinen, bei denen die begasten Weine eine positive Aromabewertung erzielen [Bertrand A., (1984). Influence of oxygen added to grape must on the synthesis of secondary products of the alcoholic fermentation. Sciences des aliments, 4(1), 45-64]. In den Versuchen wurde Sauerstoff in den Most bzw. zu Beginn der Gärung eingetragen. Als Folge erhöhte sich die Ethanolbildungsrate (Fermentierungsrate) und veränderte den Hefe-Metabolismus drastisch. Höhere Alkohole, Polyole und leichtflüchtige Säuren verschwanden vollständig, während die Konzentration an 6, 8 und 10-C Fettsäuren und ihre entsprechenden Ethyl-Ester anstieg. Geschmacksuntersuchungen an mit Sauerstoff überlagerten Weinen in Gärfässern haben gezeigt, daß unter diesen Bedingungen der sortentypische Charakter der Weine abnimmt. Zusätzlich kann auch ein Oxidationsgeschmack entstehen, der offenbar durch die verstärkte Bildung von Ethanal aus Ethanol hervorgerufen wird.

Bei der Herstellung von Sherry-Weinen, die sich durch eine kurze Fermentierungsphase (Jungwein) und eine lange Einlagerungsphase (fünf bis sechs Jahre) auszeichnen, war der Sauerstoffeintrag ebenfalls Gegenstand von Untersuchungen [Mauricio J.C., (1997). Nitrogen Compunds in Wine During 1st Biological Aging by Two Flor Film Yeasts: An Approach to Accelerated Biological Aging of Dry Sherry-Type Wines. Biotechnology & Bioengineering, 53 159-167]. Um den Alterungsprozeß zu beschleunigen, wurde während der Lagerung monatlich der Wein begast. Als Folge war ein verstärkter Verbrauch der Aminosäuren L-Prolin, L-Lysin, L-Tryptophan, L-Glutamat, L-Arginin und Ammonium festzustellen. L-Methionin, GABA und Harnsäure wurden unter diesen Bedingungen vollständig verbraucht. Gerade der Verbrauch der Harnsäure ist hier besonders hervorzuheben, da diese Substanz der Vorläufer des carcinogenen Stoffes Ethyl-Carbamat ist. In einem nachfolgenden organoleptischen Test wurden.die Weine, die durch monatliche Begasung bearbeitet wurden, positiv bewertet. Vermutlich war der erhöhte Verbrauch der Aminosäuren für eine verstärkte Aromabildung verantwortlich.

Bei Rotweinen können zudem Veränderungen der Farbintensität und der Farbnuancen durch Oxidation auftreten. Während eine erhöhte Ethanalbildung zunächst zur verstärkten Rotfärbung des Weines führt, kann diese bei fortlaufenden Alterungsprozessen durch Rückgang der Anthocyane und Zunahme von Tanninen in eine unerwünschte Braunfärbung umschlagen und die Intensität abnehmen. Daher sollte besonders bei Rotweinen eine schnelle Oxidation vermieden werden. Deshalb werden sie bevorzugt in Eichenholzfässern (Barrique-Fässern) gelagert. Einerseits werden dabei Holzkomponenten wie Vanillin oder Eugenol als Geschmacksstoffe in Wein gelöst. Andererseits findet unter diesen Bedingungen ein geringfügiger Sauerstoffeintrag über den Mantel des Holzfasses statt. Die daraus resultierenden geschmacklichen Veränderungen im Wein tragen zur Qualitätssteigerung/Veredelung bei. Bei Rotweinen wird ein Qualitätsoptimum akzeptiert, das durch eine Dunkelfärbung und gleichzeitige Änderung der Zusammensetzung unter leicht oxidierenden Bedingungen hervorgerufen wird. Phenole werden als Hauptsubstrate der direkten Oxidation angesehen.

Stofftransportuntersuchungen an Holzfässern haben aber ergeben, daß der Sauerstoffdurchgang durch den Mantel des Holzfasses nur 3,057 g/m²a beträgt [Getaz-Ader J., Fabre S. (1987). Oxygen Pick-up in Compensating Tanks and various wine-stocking containers (wood, plastic, bag-inbox); 8^{th} Int. Enological Symposium, 27-29 April, Capetown, RSA].

Generell kann festgestellt werden, daß der Sauerstoffeintrag in den Wein ein geeigneter Regelparameter zum Erreichen unterschiedlicher Weinqualitäten ist [Mauricio J.C., (1997). The effects of Grape Must Fermentation Conditions on Volatile Alcohols and Esters Formed by S. cerevisiae. Journal of Science Food and Agriculture, 75 155-160]. Stark unterschiedliche Weinzusammensetzungen wurden in Abhängigkeit der Weinbereitung gemessen. Most (Vitis vinifera-Trauben) wurde unter Verwendung von S. cerevisiae unter aeroben, semi-aeroben Bedingungen, mit kurzer Begasung und unter Zugabe von Ergosterol und Ölsäure fermentiert. Unter semi-aeroben Bedingungen wurden Ethanol, Isoamylalkohol, Isobutylalkohol, Phenethylalkohol und Isoamyl-, Butyl- und Hexyl-Acetat in größeren Mengen produziert. Dagegen erhöhte sich die Konzentration von 1-Buthanol und 1-Penthanol unter anaeroben Bedingungen. Die Supplementierung von Ergosterol und Ölsäure steigerte generell die Konzentration aller Aromakomponenten. Über die Begasung kann somit die Qualität des Weines eingestellt werden.

Zusammenfassend läßt sich folgendes erkennen. Die Oxidation von Weißweinen wird tendenziell negativ bewertet. Jedoch haben organoleptische Tests auch positive Bewertungen für partiell oxidierte Weißweine erzielt. Bei Rotweinen dagegen erscheint eine definierte Teiloxidation wünschenswert. Generell verändert die Oxidation die Zusammensetzung des Weines. Sowohl direkte Oxidation (Autooxidation) von Phenolen als auch mikrobielle Metabolismus-Änderungen werden beobachtet. Bei der Lagerung in Holzfässern werden vorzugsweise leichtflüchtige Phenole und Vanillin extrahiert und tragen zum Geschmack bei.

Verfahren für den indirekten Sauerstoffeintrag in Weine sind schon in der Patentliteratur beschrieben worden. Die Eintragung von Sauerstoff in den Wein durch Elektrolyse ist daraus bekannt (CN 1 076 963). Damit können zwar hohe Sauerstoffkonzentrationen im Wein erzielt werden, jedoch wird durch die dabei direkt eingebrachten Sauerstoffblasen einerseits der Gasanteil im Gärfaß erhöht, wodurch unerwünscht leichtflüchtige Aromastoffe ausgetragen werden können, andererseits findet an der Phasengrenze Gas/Flüssigkeit aufgrund der hohen Sauerstoffpartialdrücke eine unerwünscht schnelle Oxidation leicht oxidierbarer Aromastoffe statt.

Vorgeschlagen wurde auch bereits die Einbringung von Holzrohren in die Flüssigkeit, wobei eine freie Luftzirkulation in den Rohren vorgesehen ist (US 5 537 913, ähnlich GB 2 188 902). Hierbei kommt es zwar zur Gasdiffusion durch die Holzwände, allerdings unter insbesondere von den Inhomogenitäten der Holzrohre abhängigen schwankenden, jedenfalls nicht reproduzierbaren Bedingungen.

Weitere Vorschläge befassen sich mit der Luftklimatisierung (FR 2 701 485) und der Verwendung von mit Sauerstoff angereichertem Wasser bei der Weinherstellung (CN 1 180 736).

Die Weinreifung wird heute überwiegend in Edelstahl-Gärtanks durchgeführt. Das schließt eine erwünschte langsame und geringfügige Oxidation des Weines während des Reifungsprozesses durch Sauerstoffeintragung durch den Gefäßmantel hindurch aus. Das Beispiel hochklassiger Rotweine zeigt jedoch, daß gerade Weine hoher Qualität durch allerdings mehrjährige Lagerung in Holzfässern mit entsprechend langsamer Oxidation hergestellt werden.

Der Erfindung liegt daher die Aufgabe zugrunde, ein Verfahren und eine besonders zur Verfahrensdurchführung geeignete Vorrichtung bereitzustellen, mit dem bzw. mit der eine langsame/schonende Weinoxidation in Edelstahl-Fässern zur Steigerung der Weinqualität unter reproduzierbaren Bedingungen möglich ist, ohne daß ein direkter Kontakt zwischen Sauerstoffhaltiger Gasphase und Flüssigphase erfolgt und ohne die Bildung von lokal überhöhten Sauerstoffpartialdrücken.

Die gestellte Aufgabe wird erfindungsgemäß nach dem im Patentanspruch 1 angegebenen Verfahren dadurch gelöst, daß die Begasung blasenfrei und einstellbar durch Membranpermeation vorgenommen wird. Auf diese Weise gelangt innerhalb eines im Vergleich zur jahrelangen Reifung in Holzfässern kurzen Zeitraums eine für die gewünschte Oxidationswirkung ausreichende Luft- bzw. Sauerstoffmenge ohne Auftreten von Luft- bzw. Sauerstoffblasen und damit ohne direkten Kontakt zwischen gasförmiger und flüssiger Phase in den Wein. Bei dem erfindungsgemäßen Verfahren erfolgt die Direktoxidation von Weininhaltsstoffen langsam und kontrolliert, womit eine gezielte hohe Weinqualität erreicht werden kann.

In Verfolgung des Erfindungsgedankens kann die Begasung mittels nicht-poröser Membranen (Anspruch 2) oder mittels poröser Membranen (Anspruch 3) durchgeführt werden.

Bei nicht-porösen Membranen erfolgt der Stofftransport diffusiv, wobei die Membrandurchlässigkeit vom kinetischen Durchmesser der permeierenden Moleküle und vom Membranwerkstoff abhängt. Die permeierenden Moleküle bewegen sich konzentrationsgetrieben durch "molekulare Poren" der nicht-porösen Membranen.

Bei Verwendung poröser Membranen dagegen erfolgt der Stofftransport hauptsächlich druckgetrieben. Der Sauerstoffeintrag erfolgt an der Flüssigkeitsseite der porösen Membranen mittels Sorption. Geeignete poröse Membranen besitzen Porengrößen zwischen 0,05 bis 10 µm (MF, Mikrofiltration) oder zwischen 1 bis 0,05 µm (UF, NF, Ultra- bzw. Nanofiltration). Insbesondere bei Verwendung poröser Membranen sollten die Verfahrensbedingungen so gewählt werden, daß in den Poren eine definierte Gas/Flüssigkeits-Kontaktfläche eingehalten wird und kein "Blubbern" auftritt.

Grundsätzlich können bei Verwendung poröser Membranen sowohl hydrophobe Membranen (Anspruch 4) als auch hydrophile Membranen (Anspruch 5) zur Weinbegasung eingesetzt werden. Die Verwendung hydrophiler Membranen setzt einen gasseitigen Überdruck voraus, der das Eindringen der flüssigen Phase in die Poren weitgehend verhindert. Gasseitige Überdrücke sollten bis maximal 20 bar bei UF-Membranen bzw. bis maximal 2 bar bei MF-Membranen vorgesehen werden. Zur Vereinfachung des technischen Aufwandes werden hydrophobe Membranen bevorzugt.

Für die Begasung mittels nicht-poröser Membranen eignen sich eine Reihe von polymeren Werkstoffen (Anspruch 6), vorzugsweise werden für das erfindungsgemäße Verfahren jedoch Membranen aus Polydimethylsiloxan (Silicon) oder Polytrimethylsilylpropyn (PTMSP) eingesetzt, weil hierbei höchste Sauerstoff-Permeabilitäten ermittelt wurden. Insbesondere mit Silicon-Membranen wurden ausgezeichnete Ergebnisse erzielt.

Die für nicht-poröse Membranen verwendbaren Polymere besitzen temperaturabhängig unterschiedliche Dehnungs- und Permeabilitätseigenschaften. Oberhalb einer Schwellentemperatur liegen sie gummiartig vor (Elastomere), darunter werden sie spröde. Generell gilt, daß Elastomere zwar vergleichsweise hohe Permeabilitäten, jedoch geringe Selektivitäten besitzen. Daher wird bei der Begasung mit Zuluft neben Sauerstoff auch ein Stickstoffanteil in den Wein permeieren. Umgekehrt ist ebenfalls die Permeation von Inhaltsstoffen des Weins in die Gasphase möglich, wenn diese Substanzen einen "passenden" kinetischen Durchmesser besitzen. PTMSP liegt bei Raumtemperatur "spröde" vor, Silicon ist gummiartig.

Für die porösen MF-Membranen kommen sowohl teils hydrophobe, teils hydrophile Polymere (Anspruch 7) als auch keramische Werkstoffe (Anspruch 8) in Betracht.

Für das erfindungsgemäße Verfahren können auch aus unterschiedlichen Werkstoffen zusammengesetzte Membranen verwendet werden (Anspruch 9).

Für den Verfahrenserfolg des erfindungsgemäßen Verfahrens ist es wesentlich, daß während der Begasung an der Membran einerseits das sauerstoffhaltige Gas/die Luft und andererseits die Flüssigkeit entlanggeführt werden (Anspruch 10). Sowohl für den Gastransport durch die Membran hindurch als auch für die Gaseintragung in die Flüssigkeit hinein haben sich im laminaren Bereich (Reynoldszahl Re <<2300) liegende Strömungsgeschwindigkeiten für das Gas/die Luft und die Flüssigkeit als besonders geeignet erwiesen (Anspruch 11), jedoch haben sich auf der Gasseite auch im turbulenten Bereich liegende Strömungsgeschwindigkeiten als anwendbar herausgestellt. Der gasseitige Überdruck (Anspruch 12) hängt erheblich von der Art der verwendeten Membran ab.

Eine vorteilhafte Verfahrensführung sieht die kontinuierliche Bildung eines gerichteten Flüssigkeitsteilstroms innerhalb der zu begasenden Flüssigkeit vor, der quer zur Strömungsrichtung durch Ummantelung begrenzt ist und durch eine Membranbegasungsstrecke geführt wird, bevor die Wiedervereinigung mit der übrigen Flüssigkeit erfolgt (Anspruch 13). Dieser Teilstrom, der zweckmäßig etwa horizontal durch das den zu begasenden Wein enthaltende Gefäß geführt wird, vermeidet unerwünschte Turbulenzen in dem Wein und an der Weinoberfläche.

Die erzwungene turbulenzfreie Strömung des gerichteten Flüssigkeitsteilstroms ermöglicht eine Messung der Konzentration an gelöstem Sauerstoff hinter der Membranbegasungsstrecke (Anspruch 14). Die Sauerstoffkonzentration läßt sich durch Änderung der gasseitigen Druck- und/oder Volumenstromeinstellung (14) und/oder durch Änderung der Flüssigkeitsströmungsgeschwindigkeit innerhalb der Membranbegasungsstrecke (Anspruch 15) ändern bzw. sogar regeln.

Das beschriebene erfindungsgemäße Verfahren läßt sich vorteilhaft mittels einer Vorrichtung durchführen, die in ein geschlossenes Gefäß mit gasundurchlässiger Wandung, z.B. einen Edelstahl-Gärtank, einsetzbar ist. Hierbei ist die für den Gastransport verwendete Membran mindestens teilweise Wandungselement eines gasdurchströmten, in die Flüssigkeit eingetauchten Hohlkörpers (Anspruch 16).

Gute Ergebnisse wurden erzielt, wenn der Hohlkörper als Schlauch, vorzugsweise Siliconschlauch, ausgebildet war, bei dem die Wandung vollständig als Membran wirksam war (Anspruch 17).

Zur Erzeugung des beschriebenen Flüssigkeitsteilstroms (Anspruch 13) ist der Hohlkörper vorteilhaft in einem durch ein beidendig offenes Mantelrohr gebildeten Strömungskanal angeordnet, der sich unterhalb des Flüssigkeitsspiegels im Weingefäß befindet (Anspruch 18). Das Mantelrohr kann ein gerader Rohrabschnitt sein (Anspruch 19) und ist zweckmäßig hohlzylindrisch ausgebildet (Anspruch 20). Zur Erzielung eines horizontalgerichteten Teilstroms ist das Mantelrohr horizontal angeordnet (Anspruch 21).

Im Strömungskanal, d.h. im Mantelrohr, kann eine beträchtliche Membranflächengröße untergebracht werden, wenn der als Membran ausgebildete Schlauch in gewendelter Form angeordnet ist (Anspruch 22). Hierbei liegt dann im wesentlichen zwischen den Strömungsrichtungen des Gases und des zu begasenden Weines ein Querstrom vor, welcher den Gaseintrag in den Wein begünstigt.

Dem Flüssigkeitsteilstrom im Mantelrohr kann durch im Mantelrohr angeordnete Propeller od.dgl., die durch abtauchbare ggf. drehzahlregelbare Elektromotore oder Druckluftmotore angetrieben sein können, die gewünschte langsame, gleichförmige Strömungsbewegung erteilt werden (Anspruch 23). Dadurch wird in dem Wein außerhalb des Mantelrohrs insgesamt eine schonende konvektive Umwälzströmung realisiert. Durch diese erfolgt kontinuierlich eine Durchmischung des Weines, wodurch die Reaktionsbedingungen im Gärtank verbessert werden. Je nach Förderleistung der eingesetzten Motore und Propeller od.dgl. können die Stofftransporteigenschaften an der Begasungsmembran im gewünschten Sinne beeinflußt werden. Diese Durchmischung ist dadurch beeinflußbar, daß die motorangetriebenen Propeller od.dgl. hinsichtlich der Fördermenge regelbar ausgebildet sind (Anspruch 24).

Für die Feststellung der Sauerstoffkonzentration ist es von Vorteil, wenn am Strömungsende des Mantelrohrs eine Meßsonde angebracht ist (Anspruch 25). Dadurch kann die maximale Gelöstsauerstoffkonzentration ständig kontrolliert werden. Eine zu starke Oxidation des Weines kann somit vermieden werden.

Alle Teile der Vorrichtung können als eine einteilig handhabbare Einheit ausgebildet sein (Anspruch 26), so daß keine festen Einbauten in den Flüssigkeitsgefäßen vorgenommen werden müssen. Die bewegliche Vorrichtung kann daher in jedes Weingefäß eingesetzt werden, wobei darauf zu achten ist, daß die äußeren Vorrichtungsabmessungen auf die Bedienungsöffnungen der Weingefäße abgestimmt sind. Die Vorrichtung kann mit Füßen oder Aufhängevorrichtungen versehen sein, die eine Anbringung der Vorrichtung innerhalb des Weingefäßes, z.B. des Gärtanks, mit Abstand zu allen Gefäßwandungen ermöglichen. Auch der Einsatz mehrerer, parallel geschalteter Begasungsvorrichtungen ist möglich.

Die Erfindung wird nun nachfolgend unter Bezugnahme auf ein Ausführungsbeispiel der Begasungsvorrichtung anhand von Verfahrensbeispielen näher erläutert.

Der grundsätzliche Aufbau der Vorrichtung geht aus der beigefügten Schemazeichnung hervor, die einen herkömmlichen Edelstahl-Gärtank 1 mit Mannloch 2 und einem luftdicht verschließbaren Spundloch 3 zeigt. In dem Gärtank 1 befindet sich eine Begasungsvorrichtung 4, bestehend im wesentlichen aus einem horizontal angeordneten und an beiden Enden offenen Hohlzylinder 5, einer darin befestigten Begasungsmembran 6, die als wendelförmiger Siliconschlauch ausgebildet ist, mehreren ggf. am Umfang des Hohlzylinders 5 gleichmäßig verteilt angeordneten Tauchelektromotoren 7 mit Propeller 8 an einem Ende des Hohlzylinders 5 und einer pO₂-Sonde 9 am anderen Ende des Hohlzylinders 5.

Eine Zuluftleitung 10, eine Abluftleitung 11, Elektrokabel 12 für die Stromversorgung der Elektromotoren 7 und eine pO₂-Signalleitung 13 sind luftdicht abgedichtet durch das Spundloch 3 nach außen geführt. Die Begasungsvorrichtung 4 ruht ohne feste Verbindung mit dem Gärtank mit abstandshaltenden Füßen 14 auf dem Boden des Gärtanks 1 und ist allseits vollständig von der im Gärtank 1 befindlichen Flüssigkeit umgeben.

### Verfahrensbeispiele

zunächst wird die in den nachfolgend beschriebenen Versuchen verwendete Begasungsvorrichtung 4 näher erläutert. Der aus Polymethylmethacrylat (PMMA) hergestellte Hohlzylinder 5 besaß einen Innendurchmesser von 200 mm und eine Länge von 700 mm. Die Begasungsmembran 6 war ein armierter flexibler Siliconschlauch (Hersteller: BIW Isolierstoffe GmbH, Ennepetal) von 3000 mm Länge mit einem Innendurchmesser von 3 mm und einer Ummantelung aus zwei jeweils 0,5 mm dicken Siliconschichten, so daß der Außendurchmesser 5 mm betrug. Bezogen auf den Außendurchmesser war damit die Membranfläche etwa 0,047 m² groß. Die äußere Siliconschicht enthielt ein Polyesterstützgewebe, wodurch der Schlauch mit maximal ca. 5 bar Überdruck beaufschlagt werden konnte. Nach Herstellerangaben war das Schlauchmaterial lebensmittelunbedenklich. Der Siliconschlauch war in Form einer Wendel in den Hohlzylinder 5 so eingebaut, daß er allseits flüssigkeitsumspült war. Es wurde eine pO₂-Sonde der Firma Ingold verwendet. Die Unterwassermotore mit Modellschiffsschrauben waren Erzeugnisse der Firma Brandstätter.

Beschrieben werden zwei Versuche im Vergleichsansatz. Im ersten Versuch kam nahezu vollständig vergorener Wein der Rebsorte Riesling mit einem Restgehalt an Zucker <5 g/l und im zweiten Versuch Wein der Rebsorte Weißburgunder zum Einsatz. Die Weine waren bei Versuchsbeginn jeweils hefetrüb und ungeschwefelt.

Im Riesling-Versuch wurde der Wein einem 8000 1-Gärfaß entnommen und in zwei jeweils 250 1 aufnehmende Edelstahl-Gärfässer umgelagert. Während eines der Fässer mit der Begasungsvorrichtung versehen war, enthielt das Referenz-Gärfaß keine Begasungsvorrichtung. Mittels manueller Druck- und Volumenstromeinstellung im Begasungsschlauch würde die Gelöstsauerstoffkonzentration im Gärfaß mit Begasungsvorrichtung auf <1 % eingestellt. Dabei wurde der Schlauch mit 5-8 Nl/h Zuluft (Umgebungsluft) durchströmt, wodurch eine Strömungsgeschwindigkeit zwischen 0,2 und 0,32 m/s erreicht wurde. Dieses entsprach einer laminaren Strömung mit Re <<2300. Gleichzeitig wurde gasseitig ein Überdruck zwischen 0,1 und 0,2 bar angelegt. Dabei wurde der Wein auf der Schlauchaußenseite konvektiv mit Hilfe der Elektromotoren und der Propeller durch den Hohlzylinder gefördert. Dieses geschah sehr langsam und schonend, so daß im Hohlzylinder eine laminare Strömung mit Re «2300 erreicht wurde. Die Versuchsdurchführung für den Weißburgunderwein erfolgte analog.

Der Rieslingversuch wurde unterbrechungslos über 483 h durchgeführt, der Weißburgunderversuch über 589 h. In beiden Versuchen wurde die Luftsättigung in den Weinen zwischen 0-10 % eingestellt. Im Weißburgunderversuch gelang es, die pO₂-Sättigung für ca. 300 h zwischen den Werten 0,2 und 0,8 % zu halten. Danach wurde bei beiden Versuchen sowohl das begaste als auch das Referenz-Gärfaß mit 8 g/hl Schwefeldioxid geschwefelt, wodurch die Sauerstoffverbrauchsrate der Weinhefen stark abnahm und die pO₂-Sättigung in den begasten Fässern auf etwa 10 % anstieg.

Bei beiden Versuchen zeigten die begasten Weine im Vergleich zu den nichtbegasten Referenzweinen eine leichte Bräunung und zudem jeweils ein sehr ausgeprägtes Bukett. Weinproben wurden während der Versuchsläufe täglich entnommen. Sensorische Unterschiede wurden nach ca. 3 bis 4 Wochen feststellbar. Im Vergleich zu den nichtbegasten Weinen wiesen die begasten Weine einen deutlich "weicheren" Geschmack auf. Dieser Geschmacksunterschied ist positiv zu bewerten.

Die Versuche belegen, daß ein zum Holzfaß analoger Sauerstoffeintrag im Edelstahlfaß realisiert werden kann, allerdings in viel kürzerer Zeit und damit wirtschaftlich und außerdem im Ergebnis reproduzierbar.

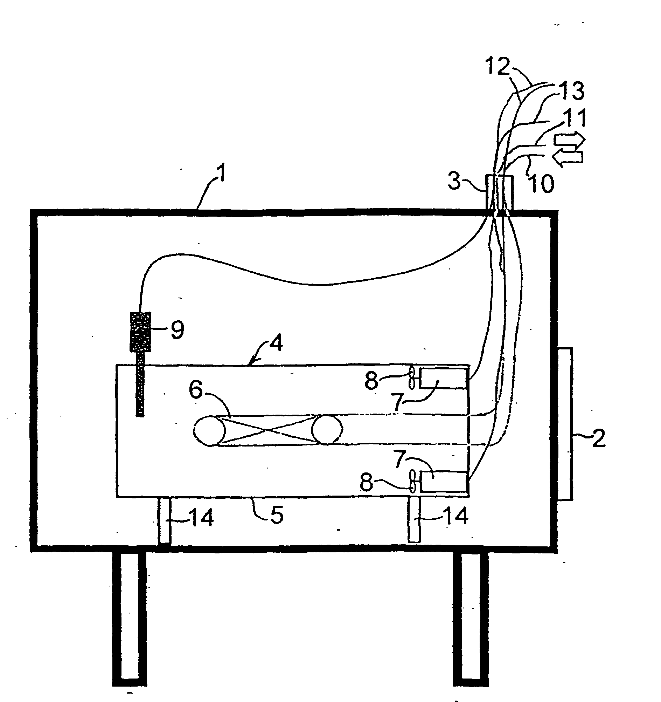

## Patentansprüche

1. Verfahren zur Begasung von für den menschlichen Verzehr bestimmten Flüssigkeiten, insbesondere von Weinen, bei welchem Sauerstoff in die Flüssigkeit eingetragen wird, **dadurch gekennzeichnet, daß** die Begasung blasenfrei und einstellbar durch Membranpermeation vorgenommen wird.

2. Verfahren nach Anspruch 1, **dadurch gekennzeichnet, daß** die Begasung mittels nicht-poröser Membranen unter diffusivem konzentrationsgetriebenem Stofftransport durchgeführt wird.

3. Verfahren nach Anspruch 1, **dadurch gekennzeichnet, daß** die Begasung mittels poröser Membranen bei im wesentlichen druckgetriebenem Stofftransport und der Sauerstoffeintrag in die Flüssigkeit an der Flüssigkeitsseite der Membran mittels Sorption durchgeführt wird.

4. Verfahren nach Anspruch 3, **dadurch gekennzeichnet, daß** hydrophobe Membranen eingesetzt werden.

5. Verfahren nach Anspruch 3, **dadurch gekennzeichnet, daß** hydrophile Membranen bei einem die Poren von der Flüssigphase im wesentlichen freihaltenden gasseitigen Überdruck eingesetzt werden.

6. Verfahren nach Anspruch 2, **dadurch gekennzeichnet, daß** als Membranwerkstoff Polymere eingesetzt werden, ausgewählt aus der Gruppe Polytrimethylsilylpropyn, Polydimethylsiloxan (Silicon), Polymethylpenten, Polymethyltrimethylsilan, Polyisopren, Polyimide, insbesondere Poly-(diphenyloxid-pyromellith)-imid, Fluorsilicon, Nitrilsilicon, Natürlicher Kautschuk, Ethylcellulose, Polyethylen, Polycarbonate, Butylkautschuk, Polystyrol, Celluloseacetat, Methylcellulose, Polyvinylchlorid, Polyvinylalcohole, Polyamide, insbesondere Polyamid-6, Polyvinylidenfluorid, Polyethylenterephthalat, Polychlortrifluorethylen, Vinylchlorid und Polytetrafluorethylen, vorzugsweise jedoch Polydimethylsiloxan (Silicon) oder Polytrimethylsilylpropyn.

7. Verfahren nach Anspruch 3, **dadurch gekennzeichnet, daß** als Membranwerkstoff Polymere eingesetzt werden, ausgewählt. aus der Gruppe Polytetrafluorethylen, Polyvinylidenfluorid, Polypropylen, Polycarbonate, Polysulfone, Polyethersulfone, sulfonierte Polysulfone, Polyacrylnitril, Celluloseester und andere Cellulosederivate, Polyimide, Polyetherimide und aliphatische Polyamide.

8. Verfahren nach Anspruch 3, **dadurch gekennzeichnet, daß** keramische Membranwerkstoffe, vorzugsweise solche auf Basis Al₂O₃ oder ZrO₂, eingesetzt werden.

9. Verfahren nach den Ansprüchen 2 bis 8, **dadurch gekennzeichnet, daß** aus unterschiedlichen Werkstoffen zusammengesetzte Membranen verwendet werden.

10. Verfahren nach einem der Ansprüche 1 bis 9, **dadurch gekennzeichnet, daß** während der Begasung sauerstoffhaltiges Gas an der inneren Seite der Membran entlanggeführt wird, während die Flüssigkeit an der äußeren Seite der Membran entlanggeführt wird.

11. Verfahren nach Anspruch 10, **dadurch gekennzeichnet, daß** die Strömungsgeschwindigkeiten für das Gas und die Flüssigkeit jeweils im laminaren Bereich liegend eingestellt werden.

12. Verfahren nach einem der Ansprüche 1 bis 11, **dadurch gekennzeichnet, daß** gasseitig ein Überdruck zwischen etwa 0,1 bis 20 bar, vorzugsweise zwischen etwa 0,1 bis 5 bar, eingestellt wird.

13. Verfahren nach einem der Ansprüche 1 bis 12, **dadurch gekennzeichnet, daß** innerhalb der Flüssigkeit kontinuierlich ein gerichteter Flüssigkeitsteilstrom gebildet wird, der durch eine Membranbegasungsstrecke geführt und danach wieder mit der übrigen Flüssigkeit vereinigt wird.

14. Verfahren nach Anspruch 13, **dadurch gekennzeichnet, daß** in Strömungsrichtung des Flüssigkeitsteilstroms nach der Membranbegasungsstrecke die Konzentration an gelöstem Sauerstoff gemessen, mit dem Sollwert verglichen und bei Abweichung davon mittels Druck- und/oder Volumenstromeinstellung des Gases auf den Sollwert eingestellt wird.

15. Verfahren nach Anspruch 13 oder 14, **dadurch gekennzeichnet, daß** zur Beeinflussung der Stofftransporteigenschaften an der Membran die Strömungsgeschwindigkeit des Flüssigkeitsteilstromes innerhalb der Membranbegasungsstrecke einstellbar ist.

16. Vorrichtung zur Begasung von für den menschlichen Verzehr bestimmten Flüssigkeiten, insbesondere von Weinen, mittels welcher Sauerstoff in die in einem geschlossenen Gefäß (1) mit gasundurchlässiger Wandung befindliche Flüssigkeit eingetragen wird, **gekennzeichnet durch** einen Hohlkörper, dessen Wandung mindestens teilweise als Membran (6) ausgebildet ist, der mindestens mit der Membran zum Untertauchen in die Flüssigkeit vorgesehen ist und an den einerseits eine Zuluftleitung (10) und andererseits eine Abluftleitung (11) angeschlossen ist.

17. Vorrichtung nach Anspruch 16, **dadurch gekennzeichnet, daß** der Hohlkörper ein Schlauch ist, dessen Wandung vollständig als Membran (6) ausgebildet ist.

18. Vorrichtung nach Anspruch 16 oder 17, **dadurch gekennzeichnet, daß** der Hohlkörper innerhalb eines Strömungskanals für einen Flüssigkeitsteilstrom angeordnet ist, wobei der Strömungskanal durch ein an beiden Enden offenes Mantelrohr (5) gebildet ist, welches zur untergetauchten Anbringung in dem die Flüssigkeit enthaltenden Gefäß (1) ausgebildet ist.

19. Vorrichtung nach Anspruch 18, **dadurch gekennzeichnet, daß** das Mantelrohr (5) ein Rohrabschnitt mit geradliniger Mittelachse ist.

20. Vorrichtung nach Anspruch 18 oder 19, **dadurch gekennzeichnet, daß** das Mantelrohr (5) hohlzylindrisch ausgebildet ist.

21. Vorrichtung nach einem der Ansprüche 18 bis 20, **dadurch gekennzeichnet, daß** das Mantelrohr (5) zur horizontalen Anbringung in dem die Flüssigkeit enthaltenden Gefäß ausgebildet ist.

22. Vorrichtung nach Anspruch 17 und einem der Ansprüche 18 bis 21, **dadurch gekennzeichnet, daß** der als Membran (6) ausgebildete Schlauch in Wendelform in dem Mantelrohr (5) und allseits mit Abstand zum Mantelrohr angebracht ist.

23. Vorrichtung nach den Ansprüchen 18 bis 22, **dadurch gekennzeichnet, daß** innerhalb des Mantelrohres (5) motorangetriebene Propeller (8) od.dgl. zur Erzeugung einer gerichteten Flüssigkeitsströmung im Mantelrohr (5) befestigt sind.

24. Vorrichtung nach Anspruch 23, **dadurch gekennzeichnet, daß** die motorangetriebenen Propeller (8) od.dgl. hinsichtlich der Fördermenge regelbar ausgebildet sind.

25. Vorrichtung nach den Ansprüchen 18 bis 24, **dadurch gekennzeichnet, daß** am Strömungsausgangsende des Mantelrohres (5) eine Meßsonde (9) zur Feststellung der Sauerstoffkonzentration angebracht ist.

26. Vorrichtung nach den Ansprüchen 16 bis 25, **dadurch gekennzeichnet, daß** alle Teile der Vorrichtung (4) eine innerhalb und außerhalb des die Flüssigkeit enthaltenden Gefäßes (1) einteilig handhabbare Einheit bilden.

## Claims

1. Method for the gas enrichment of liquids intended for human consumption, particularly of wines, in which oxygen is charged into the liquid, **characterized in that** the gas enrichment is performed without bubbles and in an adjustable manner by membrane permeation.

2. Method according to Claim 1, **characterized in that** the gas enrichment is carried out using non-porous membranes with diffusive concentration-driven substance transfer.

3. Method according to Claim 1, **characterized in that** the gas enrichment is carried out using porous membranes with essentially pressure-driven substance transfer, and the charging of oxygen into the liquid on the liquid side of the membrane is carried out by means of sorption.

4. Method according to Claim 3, **characterized in that** hydrophobic membranes are used.

5. Method according to Claim 3, **characterized in that** hydrophilic membranes are used with an overpressure on the gas side that essentially keeps the pores free from the liquid phase.

6. Method according to Claim 2, **characterized in that**, as membrane material, polymers are used which are selected from the group consisting of polytrimethylsilylpropyne, polydimethylsiloxane (silicone), polymethylpentene, polymethyltrimethylsilane, polyisoprene, polyimides, in particular poly(diphenyl oxide pyromellit)imide, fluorosilicone, nitrilosilicone, natural rubber, ethyl cellulose, polyethylene, polycarbonates, butyl rubber, polystyrene, cellulose acetate, methyl cellulose, polyvinyl chloride, polyvinyl alcohols, polyamides, in particular polyamide-6, polyvinylidene fluoride, polyethylene terephthalate, polychlorotrifluoroethylene, vinyl chloride and polytetrafluoroethylene, but preferably polydimethylsiloxane (silicone) or polytrimethylsilylpropyne.

7. Method according to Claim 3, **characterized in that**, as membrane material, polymers are used which are selected from the group consisting of polytetrafluoroethylene, polyvinylidene fluoride, polypropylene, polycarbonates, polysulphones, polyether sulphones, sulphonated polysulphones, polyacrylonitrile, cellulose esters and other cellulose derivatives, polyimides, polyether imides and aliphatic polyamides.

8. Method according to Claim 3, **characterized in that** ceramic membrane materials are used, preferably those based on Al₂O₃ or ZrO₂.

9. Method according to Claims 2 to 8, **characterized in that** membranes composed of different materials are used.

10. Method according to one of Claims 1 to 9, **characterized in that**, during the gas enrichment, oxygen-containing gas is passed along the inner side of the membrane while the liquid is passed along the outer side of the membrane.

11. Method according to Claim 10, **characterized in that** the flow rates for the gas and liquid are in each case adjusted so as to lie within the laminar range.

12. Method according to one of Claims 1 to 11, **characterized in that** an overpressure of between about 0.1 to 20 bar, preferably between about 0.1 to 5 bar, is set on the gas side.

13. Method according to one of Claims 1 to 12, **characterized in that** a directed liquid part-stream is formed continuously within the liquid, which liquid part-stream is passed through a membrane gas enrichment section and thereafter combined again with the rest of the liquid.

14. Method according to Claim 13, **characterized in that**, in the flow direction of the liquid part-stream, the concentration of dissolved oxygen is measured after the membrane gas enrichment section, compared with the desired value and, in the event of it deviating therefrom, adjusted to the desired value by means of pressure and/or volume stream adjustment of the gas.

15. Method according to Claim 13 or 14, **characterized in that**, in order to influence the substance transfer properties on the membrane, the flow rate of the liquid part-stream can be adjusted within the membrane gas enrichment section.

16. Apparatus for the gas enrichment of liquids intended for human consumption, particularly of wines, by means of which oxygen is charged into the liquid which is located in a closed vessel (1) having a gas-impermeable wall, **characterized by** a hollow body the wall of which is at least partially designed as a membrane (6), which is provided for submergence into the liquid at least with the membrane and has connected to it at one end an air inlet line (10) and at the other end an air outlet line (11).

17. Apparatus according to Claim 16, **characterized in that** the hollow body is a flexible tube the wall of which is designed entirely as a membrane (6).

18. Apparatus according to Claim 16 or 17, **characterized in that** the hollow body is arranged within a flow channel for a liquid part-stream, where the flow channel is formed by a jacketed pipe (5) which is open at both ends and is designed for submerged fitting into the vessel (1) containing the liquid.

19. Apparatus according to Claim 18, **characterized in that** the jacketed pipe (5) is a pipe section having a rectilinear centre axis.

20. Apparatus according to Claim 18 or 19, **characterized in that** the jacketed pipe (5) is designed as a hollow cylinder.

21. Apparatus according to one of Claims 18 to 20, **characterized in that** the jacketed pipe (5) is designed for horizontal fitting into the vessel containing the liquid.

22. Apparatus according to Claim 17 and one of Claims 18 to 21, **characterized in that** the flexible tube which is designed as a membrane (6) is fitted into the jacketed pipe (5) in a helical manner and at a distance from the jacketed pipe on all sides.

23. Apparatus according to Claims 18 to 22, **characterized in that** motor-driven propellers (8) or the like are fitted within the jacketed pipe (5) in order to generate a directed flow of liquid in the jacketed pipe (5).

24. Apparatus according to Claim 23, **characterized in that** the motor-driven propellers (8) or the like are designed in a manner such that they can be adjusted with respect to the amount conveyed.

25. Apparatus according to Claims 18 to 24, **characterized in that** a measuring probe (9) is fitted at the flow outlet end of the jacketed pipe (5) in order to determine the oxygen concentration.

26. Apparatus according to Claims 16 to 25, **characterized in that** all parts of the apparatus (4) form a unit that is designed as one part and can be handled inside and outside the vessel (1) containing the liquid.

## Revendications

1. Procédé de gazéification des liquides destinés à la consommation humaine, en particulier des vins, dans lequel de l'oxygène est introduit dans le liquide, **caractérisé en ce que** la gazéification est opérée sans bulles et de manière régulable par perméation membranaire.

2. Procédé selon la revendication 1, **caractérisé en ce que** la gazéification s'effectue au moyen de membranes non poreuses au cours d'un transport de substances diffus, entraîné par la concentration.

3. Procédé selon la revendication 1, **caractérisé en ce que** la gazéification s'effectue au moyen de membranes poreuses lors du transport de substances sensiblement entraîné par la pression et **en ce que** l'apport d'oxygène dans le liquide s'effectue du côté liquide de la membrane au moyen de la sorption.

4. Procédé selon la revendication 3, **caractérisé en ce que** l'on utilise des membranes hydrophobes.

5. Procédé selon la revendication 3, **caractérisé en ce que** l'on utilise des membranes hydrophiles en cas d'une surpression côté gaz, maintenant les pores sensiblement exempts de phase liquide.

6. Procédé selon la revendication 2, **caractérisé en ce que** l'on met en oeuvre à titre de matériau de membrane des polymères choisis parmi le groupe du polytriméthylsilylpropyne, du polydiméthylsiloxane (silicone), du polyméthylpentène, du polyméthyltriméthylsilane, du polyisoprène, des polyimides, en particulier du polyimide (pyromellitique de diphényloxyde), du fluorosilicone, du nitrilosilicone, du caoutchouc naturel, de l'éthylcellulose, du polyéthylène, des polycarbonates, du caoutchouc de butyle, du polystyrène, de l'acétate de cellulose, de la méthylcellulose, du polychlorure de vinyle, des alcools polyvinyliques, des polyamides, en particulier du polyamide-6, du fluorure de polyvinylidène, du polyéthylène téréphtalate, du polychlorotrifluoroéthylène, du chlorure de vinyle et du polytétrafluoroéthylène, de préférence cependant du polydiméthylsiloxane (silicone) ou du polytriméthylsilylpropyne.

7. Procédé selon la revendication 3, **caractérisé en ce que** l'on utilise comme matériau de membrane des polymères choisis parmi le groupe du polytétrafluoroéthylène, du fluorure de polyvinylidène, du polypropylène, des polycarbonates, des polysulfones, des polyéthersulfones, des polysulfones sulfonés, du polyacrylonitrile, de l'ester cellulosique et d'autres dérivés cellulosiques, des polyimides, des polyétherimides et des polyamides aliphatiques.

8. Procédé selon la revendication 3, **caractérisé en ce que** l'on utilise des matériaux de membrane céramiques, de préférence ceux à base de Al₂O₃ ou ZrO₂.

9. Procédé selon les revendications 2 à 8, **caractérisé en ce que** l'on utilise des membranes constituées de différents matériaux.

10. Procédé selon l'une des revendications 1 à 9, **caractérisé en ce que**, au cours de la gazéification, le gaz contenant de l'oxygène circule le long de la face interne de la membrane, pendant que le liquide circule le long de la face externe de la membrane.

11. Procédé selon la revendication 10, **caractérisé en ce que** les vitesses de circulation sont réglées pour le gaz et le liquide à chaque fois lorsqu'ils se trouvent dans la zone laminaire.

12. Procédé selon l'une des revendications 1 à 11, **caractérisé en ce que**, du côté gaz, on règle une surpression entre environ 0,1 et 20 bars, de préférence entre environ 0,1 et 5 bars.

13. Procédé selon l'une des revendications 1 à 12, **caractérisé en ce qu'**il se forme en continu, à l'intérieur du liquide, un courant partiel liquide dirigé, qui est conduit à travers une section de gazéification membranaire et puis, de nouveau réuni avec l'autre liquide.

14. Procédé selon la revendication 13, **caractérisé en ce que** la concentration en oxygène dissous est mesurée après la section de gazéification membranaire, dans la direction de circulation du courant partiel liquide, est comparée avec la valeur de consigne et en cas de divergence par rapport à celle-ci, est réglée sur la valeur de consigne au moyen d'un régulateur de pression et/ou de débit du gaz.

15. Procédé selon la revendication 13 ou 14, **caractérisé en ce que** la vitesse de circulation du courant partiel liquide est réglable à l'intérieur de la section de gazéification membranaire pour influencer les propriétés de transport des substances au niveau de la membrane.

16. Dispositif de gazéification de liquides destinés à la consommation humaine, en particulier de vins, au moyen duquel l'oxygène est introduit dans le liquide se trouvant dans un récipient fermé (1) avec une paroi perméable aux gaz, **caractérisé par** un corps creux dont la paroi prend au moins partiellement la forme d'une membrane (6), qui est doté au moins de la membrane permettant l'immersion dans le liquide et auquel sont raccordées d'un côté une conduite d'amenée d'air (10) et de l'autre côté une conduite d'évacuation d'air (11).

17. Dispositif selon la revendication 16, **caractérisé en ce que** le corps creux est un tuyau souple dont la paroi prend totalement la forme d'une membrane (6).

18. Dispositif selon la revendication 16 ou 17, **caractérisé en ce que** le corps creux est disposé à l'intérieur d'un canal de circulation pour un courant partiel liquide, le canal de circulation étant formé par un tube de protection (5) ouvert aux deux extrémités, qui est conçu pour la disposition immergée dans le récipient (1) contenant le liquide.

19. Dispositif selon la revendication 18, **caractérisé en ce que** le tube de protection (5) est une section de tube ayant un axe médian droit.

20. Dispositif selon la revendication 18 ou 19, **caractérisé en ce que** le tube de protection (5) est conçu à la manière d'un cylindre creux.

21. Dispositif selon l'une des revendications 18 à 20, **caractérisé en ce que** le tube de protection (5) est conçu pour la disposition horizontale dans le récipient contenant le liquide.

22. Dispositif selon la revendication 17 et l'une des revendications 18 à 21, **caractérisé en ce que** le tuyau souple prenant la forme d'une membrane (6) est disposé en spirale dans le tube de protection (5) et, de chaque côté, à distance du tube de protection.

23. Dispositif selon les revendications 18 à 22, **caractérisé en ce que** des hélices entraînées par un moteur (8) ou similaire sont fixées à l'intérieur du tube de protection (5) pour produire une circulation du liquide dirigée dans le tube de protection (5).

24. Dispositif selon la revendication 23, **caractérisé en ce que** les hélices entraînées par un moteur (8) ou similaire sont conçues de manière à être réglables par rapport à la quantité transportée.

25. Dispositif selon les revendications 18 à 24, **caractérisé en ce qu'**une sonde de mesure (9) est disposée à l'extrémité de la sortie de circulation du tube de protection (5) pour déterminer la concentration en oxygène.

26. Dispositif selon les revendications 16 à 25, **caractérisé en ce que** toutes les pièces du dispositif (4) forment une unité manipulable en une pièce à l'intérieur et à l'extérieur du récipient contenant le liquide (1).
